# EUROPEAN PATENT APPLICATION

(11) **EP 1 249 968 A2**
(43) Date of publication of application: **16.10.2002**
(21) Application number: 02001924.6
(22) Date of filing: 31.01.2002
(51) Int. Cl.: H04L 12/28

(54) **Cable modem apparatus and frequency setting method applied thereto**

(30) Priority: 28.02.2001 JP 2001054947
(71) Applicant: Kabushiki Kaisha Toshiba, Tokyo 105-8001 (JP)
(72) Inventor: Rokuhara, Tsutomu, Intell. Prop. Div. K.K. Toshiba, Minato-ku, Tokyo 105-8001 (JP)
(74) Representative: HOFFMANN - EITLE

(57) **Abstract**

A CPU selects frequency data from a flash memory at power-on and performs processing of tuning in to a data transmission frequency in a downlink in an RF interface. The flash memory includes a cache area for storing previously used frequency data in addition to a frequency table. The CPU selects frequency data with priority from the cache area.

## Description

This application is based upon and claims the benefit of priority from the prior Japanese Patent Application No. 2001-054947, filed February 28, 2001, the entire contents of which are incorporated herein by reference.

The present invention relates to a cable modem apparatus for realizing connection to the Internet using, for example, a CATV system.

In recent years, the Internet has been increasingly utilized by individuals and companies (which may hereinafter be referred to as "users" collectively) without distinction. With this trend, a variety of connection schemes (access schemes) for the Internet have increased by using not only typical telephone lines but also satellite communication channels, CATV (Cable Television) systems (CATV stations and associated facilities) or the like.

In particular, a scheme employing a CATV system (CATV Internet) draws attention as a promising one since it can realize an environment for the Internet capable of continuous connection at high speed. The CATV Internet is configured such that a CATV (center station) is connected to users through cables (coaxial cables) and the CATV is connected to the Internet. Specifically, a user accesses the Internet through the CATV station which also serves as an ISP (Internet Service Provider).

A general configuration for realizing the CATV Internet includes a kind of relay apparatus (having functions of a bridge and a router) called a CMTS (Cable Modem Termination System) or a head end modem (HM) on the CATV station side connected to a cable modem (CM) provided on the user side through a cable. The cable modem is connected to a personal computer (PC) and the like operated by a user. When a television set (TV) is also connected to the cable modem on the user side for receiving CATV broadcasts, the TV is typically connected to the CM in parallel through a distributor.

A communication channel between the CMTS on the CATV station side and the CM on the user side comprises a downlink for transmission to the user side and an uplink in the reverse direction. Typically, the downlink mainly for downloading homepages from the Internet (such as processing with a WWW browser) and the like has a higher transmission speed than the uplink. Frequency bands used are, for example, a range of 90 to 857 MHz for the downlink and a range of 10 to 55 MHz for the uplink.

The cable modem (CM) for realizing the above-mentioned CATV Internet has an interface function for transmission and reception of data to and from the Internet through the CMTS on the CATV station side and the cable. Specifically, since the CM receives information transmitted from the CMTS at power-on through the downlink for which conditions of communication between the CM and the CMTS are specified, such as the condition of which channel (data transmission frequency) of the uplink is used to transmit data to the CMTS or the condition of which symbol rate (modulation rate) is used therefor, the CM has the function of tuning (selecting a matching frequency) in to a channel (data transmission frequency) of the downlink on which the information is transmitted thereto.

A conventional CM has a plurality of preset frequency data as a table (frequency table) stored therein such that it selects available (matching) frequency data following entries in the frequency table at power-on. The CM sets the selected frequency data in an RF (Radio Frequency) interface and determines whether that frequency is matching (whether it can tune in to a data transmission frequency) within several seconds. If the selected frequency data is not matching, the CM selects frequency data in the next entry in the frequency table and sets it in the RF interface. In brief, the CM repeats processing of selecting and setting frequency data in turn from the frequency table until it can tune in to a data transmission frequency for the downlink.

In such a scheme, it may take five minutes or longer to complete the processing when the frequency data matching the downlink exists in the final entry in the frequency table. Therefore, although continuous connection is possible, the scheme requires not a little preparation time period before communication can be started with the Internet.

It is an object of the present invention to provide a cable modem apparatus capable of reducing processing time especially for tuning in to a data transmission frequency for a downlink to start communication with the Internet in a short time.

The present invention is applied to a system for constructing the CATV Internet, and particularly, relates to a cable modem apparatus capable of performing processing of tuning in to a data transmission frequency in a downlink in a short time.

Specifically, the cable modem apparatus according to the present invention comprises interface means configured to transmit and receive a data signal transported through a cable based on set frequency data, memory means for storing a frequency table for selecting a frequency matching the frequency of the data signal transmitted through the cable and having a cache area for saving frequency data which has been selected previously from the frequency table, setting means for selecting matching frequency data from the cache area or the frequency table in the memory at start of communication to set the selected frequency data in the interface, and means for saving information indicative of frequency data in the cache area when the frequency data selected from the frequency table is matching.

With such a configuration, frequency data saved in the cache area is selected with priority before frequency data are searched from all the entries in the frequency table. Since the frequency data saved in the cache area has been previously selected, it is likely to be matching frequency data. Therefore, matching frequency data can be selected in a short time, and consequently, tuning processing for a data transmission frequency in the downlink can be performed in a short time. It is thus possible to perform efficiently processing of preparing communication with the Internet.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of a system for constructing the CATV Internet according to an embodiment of the present invention;
FIG. 2 is a block diagram showing main portions of a cable modem (CM) according to the embodiment;
FIG. 3 is a table illustrating an example of contents stored in a flash memory (memory means) according to the embodiment;
FIG. 4 is a flow chart for explaining the operation of the cable modem according to the embodiment;
FIG. 5 is a flow chart for a modification of the embodiment; and
FIG. 6 is a flow chart for another modification of the embodiment.

In the following, an embodiment of the present invention will be described with reference to the drawings.

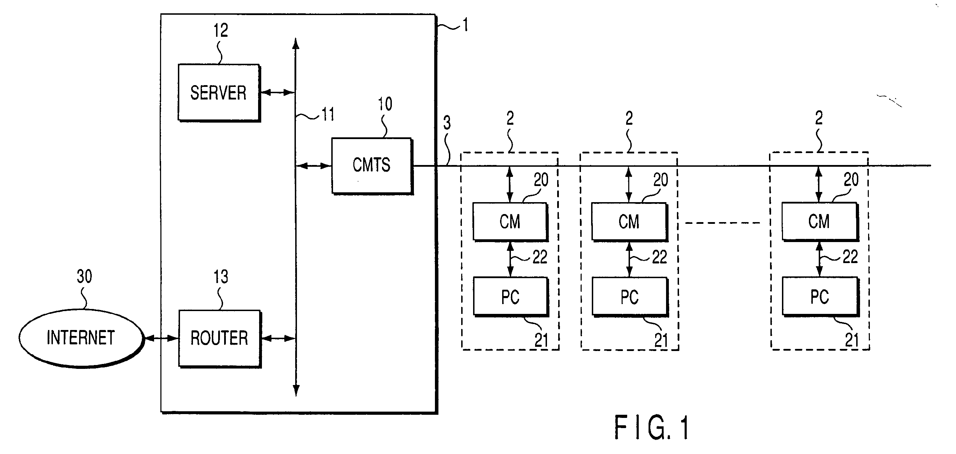

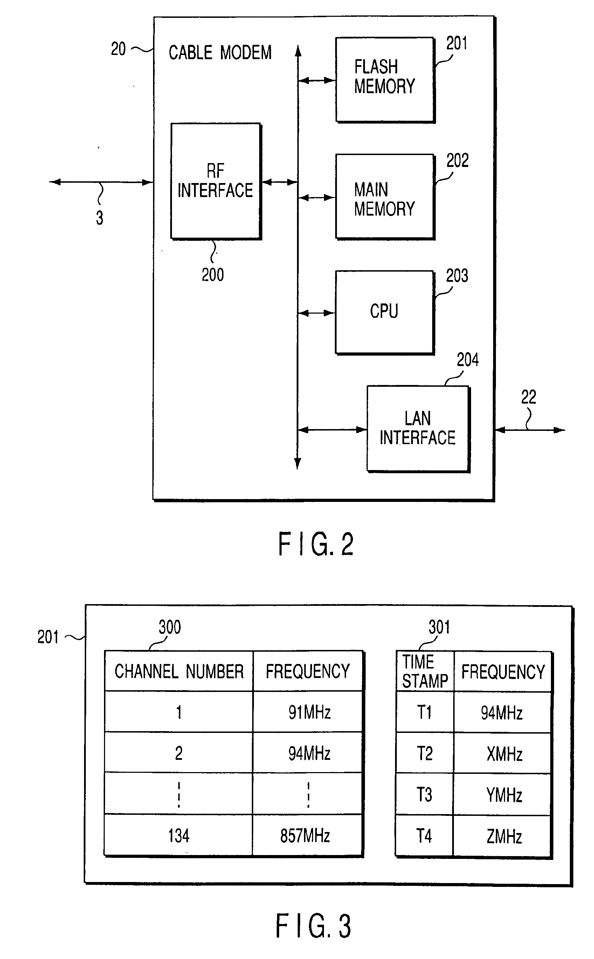

FIG. 1 is a block diagram showing the configuration of a system for constructing the CATV Internet according to the embodiment; FIG. 2 is a block diagram showing main portions of a cable modem (CM) according to the embodiment; and FIG. 3 is a table illustrating an example of contents stored in a flash memory (memory means) according to the embodiment.

As shown in FIG. 1, a system 1 on the side of a CATV station is connected to systems 2 on the side of users through a coaxial cable (or called an RF cable and hereinafter referred to simply as "cable") 3.

The system 1 of the CATV station comprises a CMTS 10, a server 12, and a router 13, all of which are connected to a LAN cable 11. The server 12 implements the function of an ISP (Internet Service Provider) for managing data communication between the Internet 30 connected thereto through the LAN cable 11 and the router 13, and the users 2 connected through the CMTS 10. The CMTS 10 is a kind of relay apparatus (having the functions of a bridge and a router) also called a head end modem (HM) as described above.

Each system 2 on the user side comprises a cable modem (CM) 20 connected to the CMTS 10 on the CATV station side through the cable 3, and a personal computer (PC) 21 connected to the CM 20 through a home LAN cable (hereinafter referred to simply as "LAN cable"). In the system 2 on the user side, omitted is a distributor for distributing signals to the CM 20 and a television set (TV) connected to the cable 3 for receiving CATV broadcasts.

As shown in FIG. 2, the CM 20 of the embodiment comprises an RF interface 200, a flash memory 201, a main memory 202, a microprocessor (CPU) 203, and a LAN interface 204.

The RF interface 200 has the function of transmitting and receiving data signals (analog signals) through the cable 3, the A/D converting function of converting the received data signals into digital signals, and the D/A converting function of converting data signals to be transmitted into analog signals. The RF interface 200 has a variety of parameters set therein in accordance with frequency data selected by the CPU 203, later described, and performs processing of tuning (processing for extracting a data signal with a frequency matching the data signal) in to a data transmission frequency in a downlink.

The flash memory 201 stores a frequency table 300 as shown in FIG. 3 and has a cache area 301 as well as a program required for the operation of the CPU 203. The main memory 202 is accessed by the CPU 203 and holds a variety of data for use during the operation of the CM 20. The CPU 203 is a controller of the CM 20 for controlling the processing of tuning in to the data transmission frequency in the downlink related to the embodiment (later described). The LAN interface 204 is an interface connecting the CM 20 with the PC 21 through a LAN cable 22.

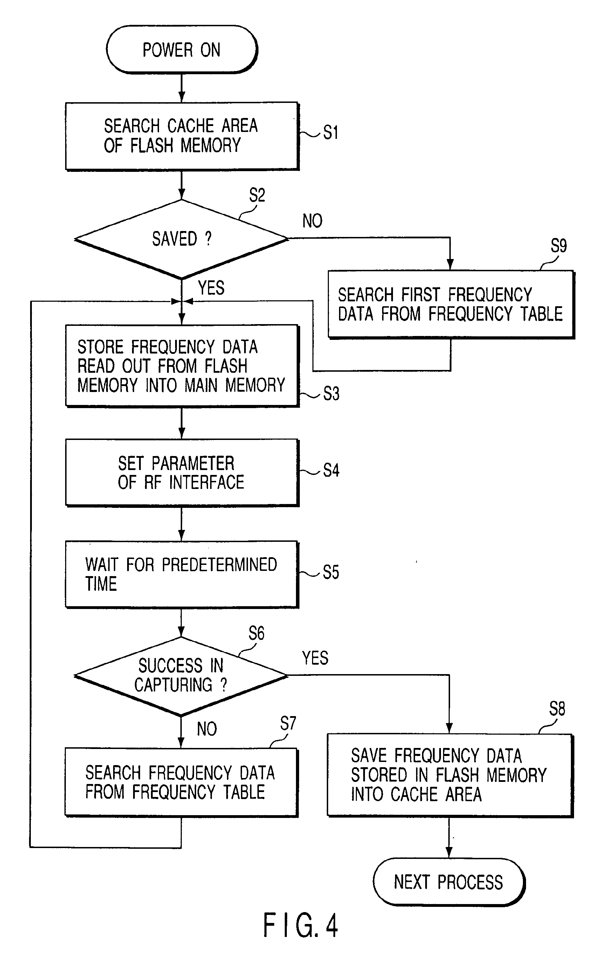

In the following, the processing of tuning in to the data transmission frequency in the downlink of the embodiment will be described with reference to the flow chart in FIG. 4 together with FIGS. 1 to 3.

In the system for constructing the CATV Internet of the embodiment, the system 2 on the user side is continuously connected to the system 1 on the CATV station side through the cable 3. When the power is turned on, in the system 2 on the user side, the CM 20 starts the processing of tuning in to the data transmission frequency in the downlink as communication preparation processing for communicating with the Internet 30.

Specifically, the CPU 203 accesses the cache area 301 of the flash memory 201 to check whether previously used frequency data is saved therein (steps S1, S2). If such data is not saved in the cache area 301, the CPU 203 searches frequency data corresponding to the first entry from the frequency table 300 stored in the flash memory 201 (step S9).

As shown in FIG. 3, the frequency table 300 includes channel numbers and frequency data for each entry and has been previously set in a fixed manner. On the other hand, the cache memory 301 is an area, as later described, for saving frequency data selected as matching frequency data, and has a capacity which can store data of items 1 to 4 including time stamp information (T1 to T4) added thereto.

The CPU 203 stores the frequency data read out from the cache area 301 of the flash memory 201 or the frequency table 300 into the main memory 202 (step S3). In this example, the frequency data read out from the frequency table 300 is stored in the main memory 202. The CPU 203 sets parameters corresponding to the frequency data stored in the main memory 202 in the RF interface 200 (step S4).

The RF interface 200 performs the tuning processing for the data transmission frequency in the downlink for transmission through the cable 3 in a predetermined time (several seconds) in accordance with the parameters corresponding to the set frequency data (step S5). The CPU 203 determines whether a data signal can be captured with the data transmission frequency based on a notification from the RF interface 200 (step S6).

If the determination result indicates that the data signal is not captured successfully with the selected frequency data, the CPU 203 reads out frequency data in the next entry from the frequency table 300 and saves the read data into the main memory 202 (No at step S6, steps S7 and S3). As a specific example, frequency data (94 MHz) of a channel number 2 is selected, for example, and saved in the main memory 202. The RF interface 200 performs the tuning processing for the data transmission frequency with the selected frequency data.

If the data signal is captured successfully in the RF interface 200, the CPU 203 determines that the frequency data (94 MHz) selected from the flash memory 201 is matching and saves the data in the cache area 301 (YES at step S6 and step S8). The CPU 203 then starts, for example, an examination of a frequency in the uplink as next processing.

As described above, when the RF interface 200 captures a data signal successfully in the tuning processing for the data transmission frequency with the selected frequency data, the frequency data is set as frequency data that matches the communication with the Internet. In this case, the CPU 203 saves the selected frequency data (for example, 94 MHz) as a matching frequency into the cache area 301 of the flash memory 201. In other words, frequency data used is saved in the cache area 301. Thus, when the CM 20 starts tuning processing for the data transmission frequency in the downlink as communication preparation processing at the next power-on (at the time of start of communication), the CM 20 makes selections with priority from the frequency data saved in the cache area 301. Since the frequency data has been used previously as a matching one, it is likely to be matching at that time. In brief, since frequently used frequency data can be selected with priority from the cache area 301 before frequency data are selected in turn from all the entries in the frequency table 300, matching frequency data can be set in a short time.

In the embodiment, the cache area 301 may save up to four frequency data such that the latest frequency data can be selected therefrom with time stamp information (T1 to T4). In addition, the cache area 301 may be updated each time a selection is made therefrom to have only the latest frequency data saved therein all the time.

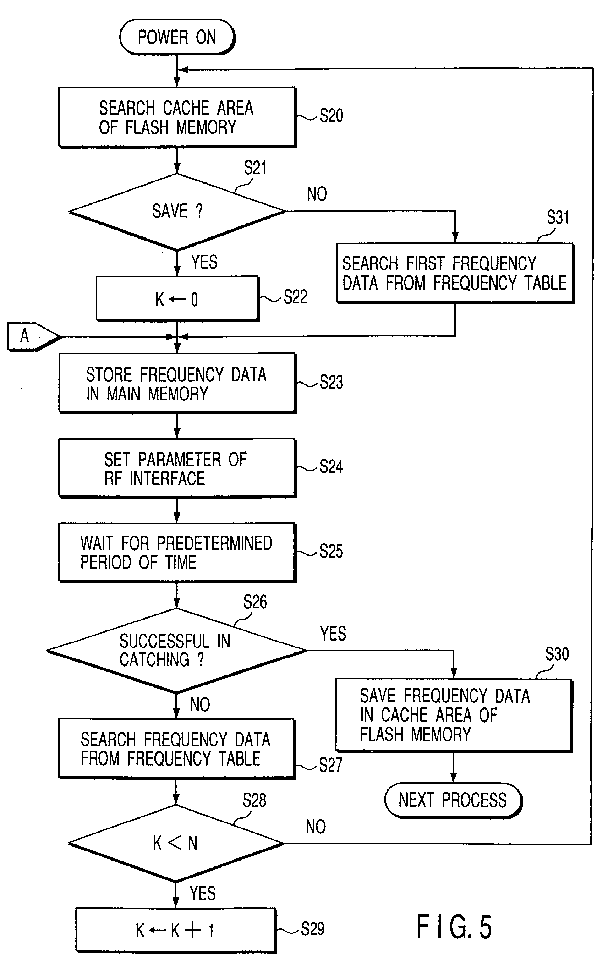

FIG. 5 is a flow chart related to a modification of the embodiment. The modification is a scheme in which, when frequency data are selected in turn from all the entries in the frequency table 300, frequency data saved in the cache area 301 is used at predetermined intervals (the number N of readouts) to perform tuning processing.

Specifically, the CPU 203 accesses the cache area 301 of the flash memory 201 to check whether or not previously used frequency data is saved therein (steps S20, S21). If such data is not saved in the cache area 301, the CPU 203 searches frequency data corresponding to the first entry from the frequency table 300 stored in the flash memory 201 (step S31).

On the other hand, if such data is saved in the cache area 301, an entry pointer for the frequency table is set to zero at step S22 and the procedure proceeds to step S23.

The CPU 203 stores the frequency data read out from the cache area 301 of the flash memory 201 or the frequency table 300 into the main memory 202 (step S23). In this example, the frequency data read out from the cache area 301 is stored in the main memory 202. The CPU 203 sets parameters corresponding to the frequency data stored in the main memory 202 in the RF interface 200 (step S24).

The RF interface 200 performs processing of tuning in to a data transmission frequency in the downlink for transmission through the cable 3 in a predetermined time (several seconds) in accordance with the parameters corresponding to the set frequency data (step S25). The CPU 203 determines whether a data signal can be caught (extracted) with the data transmission frequency based on a notification from the RF interface 200 (step S26).

When the determination result indicates that the data signal is not caught successfully with the selected frequency data, the CPU 203 reads frequency data in the next entry from the frequency table 300 and stores the read data into the main memory 202 (step S27). While the CPU 203 reads frequency data in turn from all the entries in the frequency table until catching is successfully made, the CPU 203 searches frequency data from the cache area 301 every predetermined "N" number of readouts and continues the tuning processing (step S28).

When the data signal can be caught successfully in the RF interface 200, the CPU 203 determines that the frequency data selected from the flash memory 201 is matching and saves the data into the cache area 301 (step S30). The CPU 203 then starts, for example, an examination of a frequency in the uplink as next processing.

In brief, according to the modification, when it is determined that frequency data saved in the cache area 301 is not matching in the first processing, for example due to the effect of noise on data transmission through the cable 3, the frequency data saved in the cache area 301 is again used while the processing is continued following the entries in the frequency table 300. If the effect of noise is eliminated, the frequency data saved in the cache area 301 is likely to be matching. Therefore, since it is possible to select frequency data which is likely to be matching from the cache area 301 while the frequency data are selected in turn from all the entries in the frequency table 300, matching frequency data can be consequently set in a short time.

According to the present invention, it is possible to provide a cable modem apparatus capable of reducing the processing time to tune in to the data transmission frequency in the downlink. Therefore, the cable modem apparatus of the present invention is applied, for example, to a system for constructing the CATV Internet, thereby making it possible to realize a system capable of completing processing for preparing communication with the Internet in a short time.

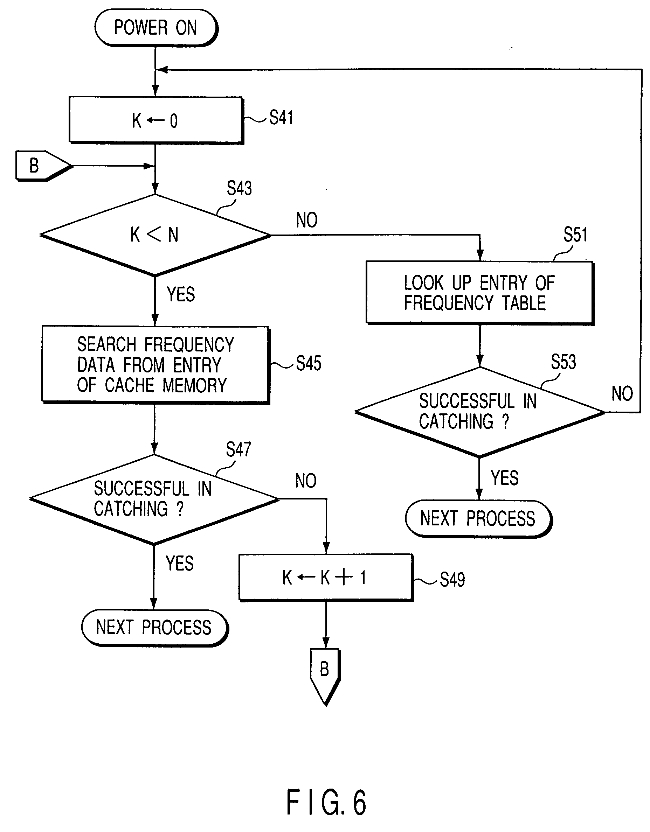

FIG. 6 is a flow chart related to another modification of the embodiment. The modification is a scheme in which, when frequency data are selected in turn from all the entries in the cache area 301, frequency data saved in the frequency table 300 is used at predetermined intervals (the number N of readouts) to perform tuning processing.

At step S41, the CPU 203 sets zero in an entry pointer K in the cache area 301. At step S43, the CPU 203 determines whether or not a predetermined interval has elapsed (number N of readouts is reached). If the predetermined interval has not elapsed, the CPU 203 searches frequency data from entries in the cache area 301 at step S45. At step S47, the CPU 203 determines whether or not a data signal can be caught (extracted) from the searched data transmission frequency.

When the determination result indicates that the data signal is not caught successfully with the selected frequency data, the CPU 203 increments the entry pointer K in the cache area 301 by one at step S49, and the procedure proceeds to steps S43, S45 to search frequency data in the next entry.

On the other hand, when the data signal is caught successfully at step S47, the CPU 203 starts, for example, an examination of a frequency in the uplink as next processing.

Alternatively, if it is determined that the predetermined interval has elapsed (number N of readouts is reached) at step S43, the CPU reads frequency data out from entries in the frequency table 300 at step S51. Then, at step S53, when the data signal is not caught successfully with the read frequency data, the CPU 203 returns to the step S41. On the other had, if the catching succeeds, the CPU 203 starts, for example, an examination of a frequency in the uplink as next processing.

## Claims

1. A cable modem apparatus connected to a network (30) system (30) through a cable (3), **characterized by** comprising:
an interface (200) configured to transmit and receive a data signal transported through said cable based on set frequency data;
a memory (201) configured to store a frequency table (300) for selecting a frequency matching the frequency of said data signal transmitted through said cable and having a cache area (301) for saving frequency data which has been selected previously from said frequency table;
setting means (203) configured to select matching frequency data from said cache area or said frequency table in said memory at start of communication to set said selected frequency data in said interface; and
saving means (203) configured to save information indicative of frequency data in said cache area when said frequency data selected from said frequency table is matching.

2. The cable modem apparatus according to claim 1, **characterized in that** said setting means (203) selects frequency data with priority in accordance with the information saved in said cache area (301), and when it is determined that said frequency data is not matching, said setting means sequentially searches said frequency table (300) for matching frequency data.

3. The cable modem apparatus according to claim 1, **characterized in that** said setting means (203) selects frequency data with priority in accordance with the information saved in said cache area (3d), and when it is determined that said frequency data is not matching, said setting means sequentially searches said frequency data for matching frequency data and determines at predetermined intervals whether or not frequency data in accordance with the information saved in said cache area (301) is matching.

4. The cable modem apparatus according to claim 1, **characterized in that** said setting means (203) sequentially searches said cache area (301) for matching frequency data and determines at predetermined intervals whether said frequency data stored in said frequency table (300) is matching.

5. A method of setting a frequency applied to a cable modem apparatus (20) connected to a network system (30) through a cable (3), said cable modem apparatus comprising an interface (200) configured to transmit and receive a data signal based on set frequency data, and a memory (201) configured to store a frequency table (300) for selecting a frequency matching the frequency of said data signal transmitted through said cable and having a cache area (301) for saving frequency data which has been selected previously from said frequency table, said method comprising the steps of:
selecting (S1-S3) frequency data with priority from said cache area of said memory at start of communication;
sequentially selecting frequency (S3-S7) data from said frequency table to find matching frequency data when said frequency data selected from said cache area is not matching; and
selecting (54) matching frequency data from said cache area or said frequency table to set said selected data in said interface.

6. The method according to claim 5, **characterized in that** frequency data is selected with priority in accordance with the information saved in said cache area, and when it is determined that said frequency data is not matching, said frequency table is sequentially searched for matching frequency data and determination is made at predetermined intervals whether frequency data saved in said cache area is matching (ND in step S6,S7,S3).

7. The method according to claim 5, **characterized in that** said cache area is sequentially searched for matching frequency data and determination is made at predetermined intervals whether or not frequency data stored in said frequency table is matching (FIG. 6).

8. A method of setting a frequency applied to a cable modem apparatus (20) connected to a network system (30) through a cable (3), said cable modem apparatus comprising an interface (200) configured to transmit and receive a data signal based on set frequency data, and a memory (201) configured to store a frequency table for selecting a frequency matching the frequency of said data signal transmitted through said cable and having a cache area for saving frequency data which has been selected previously from said frequency table, said method comprising the steps of:
searching (FIG. 5) said cache area of said memory at start of communication, and when frequency data is stored in said cache area, setting said frequency data stored in said cache area in said interface, and when no frequency data is stored in said cache area, setting matching frequency data from said frequency table in said interface; and
when a data signal is successfully captured in said interface, saving said frequency data in said cache area (FIG. 5).
